# EUROPÄISCHE PATENTSCHRIFT

(11) **EP 3 473 871 B1**
(45) Veröffentlichungstag und Bekanntmachung des Hinweises auf die Patenterteilung: **30.09.2020**
(21) Anmeldenummer: 17197214.4
(22) Anmeldetag: 19.10.2017
(51) Int. Cl.: F16B 37/06

(54) **VERFAHREN ZUM SETZEN EINES BLINDNIETELEMENTS ZUM VERSTEIFEN VON ZWEI BEABSTANDET ANGEORDNETEN ABSCHNITTEN ZWEIER BAUTEILE ODER EINES BAUTEILS**
METHOD FOR SETTING A BLIND RIVET ELEMENT FOR STIFFENING TWO SEPARATED SECTIONS OF TWO COMPONENTS OR A COMPONENT
PROCÉDÉ DE POSE D'UN ÉLÉMENT FORMANT RIVET AVEUGLE DESTINÉ À RIGIDIFIER DEUX SECTIONS DISPOSÉES DE MANIÈRE ESPACÉE DE DEUX COMPOSANTS OU D'UN COMPOSANT

(43) Veröffentlichungstag der Anmeldung: 24.04.2019
(73) Patentinhaber: BBA S.r.l., 63076 Centobuchi di Monteprandone (AP) (IT); Bossard AG, 6301 Zug (CH)
(72) Erfinder: DURANTE, Mattia, Sant'Egidio alla vibrata (TE) 64016 (IT); KHOO, Foo Heng, Singapore 277107 (SG)
(74) Vertreter: Franke, Markus

(56) Entgegenhaltungen:
- EP-A1- 1 918 596
- WO-A1-2016/162407
- DE-A1- 4 341 206
- DE-A1-102010 053 959

## Beschreibung

Die Erfindung betrifft ein Verfahren zum Setzen eines Blindnietelements zum Versteifen von zwei beabstandet angeordneten Abschnitten zweier Bauteile oder eines Bauteils.

Blindnietelemente haben sich für Befestigungsaufgaben bewährt, bei denen eine Schraubverbindung im Bereich dünnwandiger Materialien, beispielsweise in Blechen, erforderlich ist, in die normalerweise kein Gewinde geschnitten werden kann.

Ein derartiges Blindnietelement ist beispielsweise als Blindnietmutter, welche ein Innengewinde zur Bildung einer Schraubverbindung aufweist, oder als Blindnietgewindebolzen, wobei ein Gewindebolzen des Blindnietelements ein Außengewinde zur Bildung einer Schraubverbindung aufweist, ausgebildet.

Blindnietelemente bilden den Gegenflansch - Schließkopf - durch Wulstbildung, also eine Materialfalte. Je geringer die Materialstärke eines dünnwandigen Gegenstandes, insbesondere eines Bleches ist, mit dem das Blindnietelement definierter Abmessung zu verbinden ist, desto größer ist typischerweise der Außendurchmesser des Wulstes.

Ist das Blindnietelement beispielsweise als Blindnietmutter ausgebildet, wird dieses in dem Blech befestigt und stellt nach dessen Befestigung ein Innengewinde für eine Schraubverbindung zur Verfügung. Das Setzen der Blindnietmutter erfolgt in der Regel derart, dass der Schaft der Blindnietmutter zunächst in ein vorgefertigtes Setzloch des Bauteils, insbesondere eines Bleches, eingeführt wird. Im Anschluss daran werden die Blindnietmutter und das Bauteil mit einem geeigneten Werkzeug, welches typischerweise einen rotierbaren und axial verschiebbaren Gewindedorn aufweist, vernietet, indem der Gewindedorn von der Setzkopfseite aus in das Innengewinde des Schafts der Blindnietmutter geschraubt und dann axial derart verschoben wird, dass auf einer dem Setzkopf abgewandten Seite des Bauteils eine Stauchung des Verformungsabschnitts erfolgt und sich somit zwischen dem Gewindeanfang und der dem Setzkopf abgewandten Seite des Bauteils ein Gegenflansch ausbildet. Dieser durch Umformung des Verformungsabschnitts gebildete Gegenflansch wird auch als Schließkopf bezeichnet. Der Schließkopf verankert zusammen mit dem Setzkopf die Blindnietmutter in dem Bauteil. Im Anschluss an die Verformung der Blindnietmutter wird der Gewindedorn des Werkzeugs aus der Blindnietmutter ausgeschraubt und das Innengewinde der Blindnietmutter steht für eine Bildung einer Schraubverbindung zur Verfügung.

Ist das Blindnietelement beispielsweise als Blindnietgewindebolzen ausgebildet, weist der Schaft im Bereich seines dem Setzkopf abgewandten Endes einen Verbindungsabschnitt für einen Gewindebolzen auf. Typischerweise ist der Verbindungsabschnitt als Aufnahme ausgebildet, die den Gewindebolzen aufnimmt, wobei der Gewindebolzen im Bereich der Aufnahme mit dem Schaft des Blindnietelements verschweißt ist. Das Setzen des Blindnietgewindebolzens erfolgt entsprechend dem Setzen der Blindnietmutter, mit dem Unterschied, dass unmittelbar an dem Gewindebolzen gezogen wird.

Ein Blindnietelement, das als Blindnietmutter oder als Blindnietgewindebolzen ausgebildet ist, ist aus der EP 1 918 596 A1 bekannt.
In der DE 44 32 956 A1 wird eine Blindnietmutter beschrieben, die dazu geeignet ist, zwischen zwei parallelen plattenförmigen Bereichen, die einem einzigen Bauteil, zum Beispiel einem Hohlprofil oder zwei verschiedenen Bauteilen zugehörig sein können, eingesetzt zu werden, um ein Innengewinde bereitzustellen. Bei geeigneter Wahl der Länge der Blindnietmutter kann dabei zugleich ein Abstützeffekt erreicht werden, insofern ein Versteifen der beiden beabstandet angeordneten Bereiche erreicht werden, indem die durch die Schraubverbindung eingeleitete Kraft auf die beiden plattenförmigen Bereiche verteilt wird, was sich wiederum günstig auf deren Dimensionierung auswirkt.

Die in der vorgenannten Druckschrift beschriebene Blindnietmutter dient somit als Stützelement, welches die beiden plattenförmigen, beabstandet angeordneten Bereiche versteift. Das Versteifen der beiden plattenförmigen Bereiche erfolgt dadurch, dass einer der beiden Bereiche nach dem Setzen der Blindnietmutter zwischen dem Setzkopf und dem durch Verformung gebildeten Schließkopf der Blindnietmutter klemmend gehalten ist. An ihrem dem Setzkopf abgewandten Ende weist die Blindnietmutter einen sich über den äußeren Umfang erstreckenden Absatz mit einer ringförmigen Auflagefläche und einer mantelförmigen Anlagefläche für den zweiten plattenförmigen Bereich auf, der mittels einer dem Innengewinde zugeordneten Kopfschraube an der Blindnietmutter befestigbar ist, wodurch, bei geeigneter Wahl der Länge der Blindnietmutter, der zweite plattenförmige Bereich, nach Einschrauben der Kopfschraube in das Innengewinde, zwischen einem Kopf der Kopfschraube und der ringförmigen Auflagefläche klemmend gehalten ist.

Das Blindnietelement, welches aus der DE 44 32 956 A1 bekannt und als Blindnietmutter ausgebildet ist, ist dazu geeignet, zwei beabstandet angeordnete Abschnitte zweier Bauteile oder eines Bauteils, insbesondere zwei gegenüberliegende Wandungen eines Hohlkörpers, zu versteifen. Das Blindnietelement weist einen Kopfabschnitt und einen in einer axialen Richtung des Blindnietelements an den Kopfabschnitt angrenzenden Schaft auf, wobei der Schaft ein Innengewinde und zwischen dem Innengewinde und dem Kopfabschnitt einem ersten Verformungsabschnitt aufweist, wobei der Kopfabschnitt einen größeren Außendurchmesser als der Schaft aufweist. Eine Wandung des Schafts weist im Bereich des ersten Verformungsabschnitts eine Schwächung auf, zur Ausbildung eines ersten Schließkopfs auf einer dem Kopfabschnitt abgewandten Seite des einen Abschnitts der zwei Abschnitte nach einem Verformen des ersten Verformungsabschnitts.

Aus der DE 10 2014 014 474 A1 ist weiterhin ein Befestigungssystem zum Befestigen von zwei flachen Bauteilen aneinander bekannt, wobei das Befestigungssystem als Blindniet ausgebildet ist. Das Blindniet weist mindestens eine Spreizlasche auf, um die zwei Bauteile, die miteinander zu verbinden sind, voneinander zu beabstanden bzw. zu distanzieren. Zu diesem Zweck wird die mindestens ein Spreizlasche zumindest abschnittsweise zwischen den beiden Bauteilen angeordnet, wodurch ein Zwischenraum zwischen den beiden Bauteilen bereitgestellt wird, um zu gewährleisten, dass in diesem Zwischenraum befindlicher Klebstoff gleichmäßig zwischen den Bauteilen verteilt ist und bleibt und es zu keiner Taschenbildung kommt. Dabei wird die mindestens eine Spreizlasche durch Verformen des Schafts des Blindniets gebildet, wobei die mindestens eine Spreizlasche als Wulst an der Außenwandung des Schafts auszubilden ist. Weiterhin weist das Blindniet an einem ersten Ende des Schafts einen Setzkopf auf, wobei durch Komprimieren des Schafts an einem zweiten Ende des Schafts ein die Spreizlasche bildender Schließkopf zu bilden ist, wobei die beiden Bauteile zwischen dem Setzkopf und dem Schließkopf einzuklemmen sind.

Aus der DE 43 41 206 A1 ist weiterhin Aufnahmeteil bekannt, welches nach Art einer Blindnietmutter ausgebildet ist. Das Aufnahmeteil dient der Erhöhung der Steifigkeit eines Hohlprofils. Das Aufnahmeteil hat an dem nahe einem ersten Wandungsteil des Hohlprofils liegenden Endbereich ein Innengewinde. Das Aufnahmeteil wird zunächst im Herstellzustand in eine Wandöffnung des ersten Wandungsteils bis zur Anlage eines Bundes des Aufnahmeteils am ersten Wandungsteil eingeführt, wobei der gegenüberliegende Endabschnitt des Aufnahmeteils etwas über das zweite Wandungsteil hinausragt. Sodann wird in das Innengewinde des Aufnahmeteils eine am Bund des Aufnahmeteils anliegende Schraube eingeschraubt und diese festgezogen, wobei sich schließlich eine an der Innenseite des ersten Wandungsteils anliegende, radial gerichtete Auswölbung ausbildet. Hierdurch ist das Aufnahmeteil am Hohlprofil dreh- und schubfest festgelegt. Schließlich wird im Bereich des zweiten Wandungsteils in den Hohlraum des Aufnahmeteils ein Spreizdorn eingeführt und mit diesem ein an der Innenseite des zweiten Wandungsteils anliegende, radial gerichtete Wulst erzeugt. Als letzter Arbeitsgang wird der über das zweite Wandungsteil hinausragende Endabschnitt des Aufnahmeteils durch Vernieten, Aufdornen oder Aufrollen an die Außenseite des zweiten Wandungsteils angedrückt, wobei schließlich eine Anlageschulter entsteht.

Aufgabe der vorliegenden Erfindung ist es ein Verfahren zum Setzen eines Blindnietelements anzugeben, welches bei geringem Fertigungs- und Setzaufwand ein Versteifen von zwei beabstandet angeordneten Abschnitten zweier Bauteile oder eines Bauteils, insbesondere ohne ein Verschrauben eines weiteren Elements einer Schraubverbindung mit dem Blindnietelement, ermöglicht und des weiteren einen großen Anwendungsbereich hat, also einen Bereich unterschiedlicher Abstände und/oder Wandstärken der beiden Abschnitte, innerhalb dessen das Blindnietelement bei gleicher Abmessung des Schafts verwendet werden kann.

Diese Aufgabe wird durch ein Verfahren, welches die Merkmale des Patentanspruchs 1 aufweist, gelöst.

Das Verfahren zum Setzen eines Blindnietelements dient dem Versteifen von zwei beabstandet angeordneten Abschnitten zweier Bauteile oder eines Bauteils. Bei den zwei Abschnitten handelt es sich insbesondere um zwei gegenüberliegenden Wandungen eines Hohlkörpers, beispielsweise eines Hohlprofils.

Das Verfahren zum Setzen des Blindnietelements weist die folgenden Verfahrensschritte auf:
a) Bereitstellen des Blindnietelements, des einen Abschnitts und des anderen Abschnitts der beiden beabstandet angeordneten Abschnitte, wobei das Blindnietelement einen Kopfabschnitt und einen in einer axialen Richtung des Blindnietelements an den Kopfabschnitt angrenzenden Schaft aufweist, wobei der Schaft ein Innengewinde oder einen Verbindungsabschnitt für einen Gewindebolzen und zwischen dem Innengewinde bzw. dem Verbindungsabschnitt für den Gewindebolzen und dem Kopfabschnitt einen ersten Verformungsabschnitt aufweist, wobei der Kopfabschnitt einen größeren Außendurchmesser als der Schaft aufweist, wobei eine Wandung des Schafts im Bereich des ersten Verformungsabschnitts eine Schwächung aufweist, zur Ausbildung eines ersten Schließkopfes auf einer dem Kopfabschnitt abgewandten Seite des einen Abschnitts der zwei Abschnitte nach einem Verformen des ersten Verformungsabschnitts, wobei der Schaft einen zweiten Verformungsabschnitt aufweist, wobei die Wandung des Schafts im Bereich des zweiten Verformungsabschnitts eine Schwächung aufweist, zur Ausbildung eines Setzkopfes auf einer dem Kopfabschnitt abgewandten Seite des anderen Abschnitts der zwei Abschnitte nach einem Verformen des zweiten Verformungsabschnitts, wobei das Innengewinde bzw. der Verbindungsabschnitt für den Gewindebolzen zwischen dem ersten Verformungsabschnitt und dem zweiten Verformungsabschnitt ausgebildet ist, wobei der Schaft zwischen dem Innengewinde bzw. dem Verbindungsabschnitt für den Gewindebolzen und dem zweiten Verformungsabschnitt einen dritten Verformungsabschnitt aufweist, wobei die Wandung des Schafts im Bereich des dritten Verformungsabschnitts eine Schwächung aufweist, zur Ausbildung eines zweiten Schließkopfes auf einer dem Kopfabschnitt zugewandten Seite des anderen Abschnitts der zwei Abschnitte nach einem Verformen des dritten Verformungsabschnitts,
b) Einbringen von jeweils einem Setzloch in die Abschnitte, wobei der Verfahrensschritt b) durchaus vor dem Anordnen der zwei Abschnitte erfolgen kann,
c) Einführen des Schafts des Blindnietelements in die beiden Abschnitte derart, dass der Schaft die beiden Setzlöcher durchsetzt, wobei der Kopfabschnitt auf einer dem anderen Abschnitt abgewandten Seite des einen Abschnitts in der axialen Richtung beabstandet zu dem einen Abschnitt angeordnet ist und der zweite Verformungsabschnitt auf einer dem einen Abschnitt abgewandten Seite des anderen Abschnitts angeordnet ist,
d) Verformen des zweiten Verformungsabschnitts derart, dass dieser auf der dem Kopfabschnitt abgewandten Seite des anderen Abschnitts den Setzkopf ausbildet,
e) Verformen des dritten Verformungsabschnitts derart, dass dieser auf der dem Kopfabschnitt zugewandten Seite des anderen Abschnitts den zweiten Schließkopf ausbildet,
f) Verformen des ersten Verformungsabschnitts derart, dass dieser auf der dem Kopfabschnitt abgewandten Seite des einen Abschnitts den ersten Schließkopf ausbildet,
wobei die Verfahrensschritte d), e) und f) in der angegebenen Reihenfolge erfolgen.

Die Verfahrensschritte erfolgen vorzugsweise in der angegebenen Reihenfolge.

Beim Setzen des Blindnietelements in die Setzlöcher der zwei beabstandet angeordneten Abschnitte werden durch Verformen des ersten Verformungsabschnitts, des zweiten Verformungsabschnitts und des dritten Verformungsabschnitts der erste Schließkopf, der Setzkopf und der zweite Schließkopf gebildet, wobei der eine Abschnitt zwischen dem ersten Schließkopf und dem Kopfabschnitt des Blindnietelements angeordnet ist und der andere Abschnitt zwischen dem Setzkopf und dem zweiten Schließkopf des Blindnietelements angeordnet ist, wodurch die beiden Abschnitte gegeneinander versteift werden. Beispielsweise wird bei einer in der axialen Richtung auf den einen Abschnitt einwirkenden Kraft die auf den einen Abschnitt einwirkende Kraft über den Kopfabschnitt und/oder den ersten Schließkopf auf das Blindnietelement übertragen, wobei die auf das Blindnietelement übertragene Kraft über den Setzkopf und/oder den zweiten Schließkopf wiederum auf den anderen Abschnitt übertragen wird. Umgekehrt wird bei einer Krafteinwirkung auf den anderen Abschnitt die auf den anderen Abschnitt einwirkende Kraft über das Blindnietelement auf den einen Abschnitt übertragen. Folglich stützt sich der eine Abschnitt bei Einwirkung einer Kraft über das in die beiden Abschnitte gesetzte Blindnietelement an dem anderen Abschnitt ab und umgekehrt, wodurch eine Versteifung der beiden beabstandet angeordneten Abschnitte erfolgt, sodass insbesondere eine Veränderung eines axialen Abstands der beiden beabstandet angeordneten Abschnitte verhindert oder zumindest limitiert ist. Auch eine Verschiebung der beiden Abschnitte in eine zu der axialen Richtung senkrechten Richtung wird durch das Blindnietelement verhindert oder zumindest limitiert.

Das Verfahren ermöglicht es somit, die zwei beabstandet angeordneten Abschnitte gegeneinander zu versteifen, ohne dass ein weiteres Element einer Schraubverbindung, beispielsweise eine Schraube, mit dem Blindnietelement verbunden werden muss. Dementsprechend ist es nicht notwendig, zwecks Versteifens der beiden Abschnitte das Innengewinde bzw. den Gewindebolzen für eine die zwei Abschnitte versteifende Schraubverbindung zu verwenden. Folglich kann das Innengewinde bzw. der Gewindebolzen frei verwendet werden, zur Bildung einer Schraubverbindung.

Da erst durch die Verformung der entsprechenden Verformungsabschnitte der Setzkopf, der zweite Schließkopf und der erste Schließkopf gebildet werden, kann das Blindnietelement bei gleicher Abmessung des Schafts in einem Bereich unterschiedlicher Abstände der zwei Abschnitte und/oder unterschiedlicher Wandstärken der zwei Abschnitte eingesetzt werden, da die Lage des Setzkopfes, die Lage des zweiten Schließkopfes und die Lage des ersten Schließkopfes abhängig von den konkreten Wandstärken der zwei Abschnitte und dem konkreten Abstand der zwei Abschnitte variieren. Folglich ist ein Blindnietelement definierter Abmessung für unterschiedliche Gegebenheiten der zwei Abschnitte, insbesondere Wandstärke und Abstand der zwei Abschnitte, einsetzbar, sodass keine Anpassung der Abmessung des Blindnietelements an die konkrete Gegebenheit notwendig ist. Das wirkt sich vorteilhaft auf die Herstellung und die Lagerhaltung aus.

Die Verbindung zwischen dem Gewindebolzen und dem Schaft im Bereich des Verbindungsabschnitts kann beispielsweise durch eine Crimp-Verbindung, Clinch-Verbindung, Klebe-Verbindung oder Schweiß-Verbindung gebildet sein Vorzugsweise ist das Blindnietelement einstückig ausgebildet.

Vorzugsweise besteht das Blindnietelement aus einem Metall.

Insbesondere ist vorgesehen, dass nach dem Setzen des Blindnietelements, folglich nach dem Verformen der drei Verformungsabschnitte, der Kopfabschnitt und der erste Schließkopf den einen Abschnitt der zwei Abschnitte auf abgewandten Seiten kontaktieren und der Setzkopf und der zweite Schließkopf den anderen Abschnitt der zwei Abschnitte auf abgewandten Seiten kontaktieren. Als besonders vorteilhaft wird es in diesem Zusammenhang angesehen, wenn der eine Abschnitt zwischen dem Kopfabschnitt und dem ersten Schließkopf klemmend gehalten ist und/oder der andere Abschnitt zwischen dem Setzkopf und dem zweiten Schließkopf klemmend gehalten ist.

Als besonders vorteilhaft wird es angesehen, wenn der zweite Verformungsabschnitt an einem dem Kopfabschnitt abgewandten Ende des Schafts ausgebildet ist.

Hinsichtlich eines vereinfachten Setzens des Blindnietelements wird es als zweckmäßig angesehen, wenn eine zur Bildung des Setzkopfs aufzubringende Kraft geringer ist als eine zur Bildung des zweiten Schließkopfs aufzubringende Kraft. So kann beispielsweise zwecks Setzens des Blindnietelements nach einem Einführen des Schafts des Blindnietelements in die beiden Setzlöcher der zwei Abschnitte durch Einleiten einer Kraft in den Schaft des Blindnietelements zunächst der Setzkopf gebildet werden, da die zur Bildung des Setzkopfs aufzubringende Kraft geringer ist als die Kraft, die zur Bildung des zweiten Schließkopfs notwendig ist. Im Anschluss an die Bildung des Setzkopfs wird eine größere Kraft in den Schaft des Blindnietelements eingeleitet, sodass sich der zweite Schließkopf bildet. Das Einbringen der Kraft in den Schaft kann beispielsweise derart erfolgen, dass ein geeignetes Werkzeug, welches einen rotierbaren und axial verschiebbaren Gewindedorn aufweist, von der dem Kopfabschnitt abgewandten Seite des Blindnietelements in das Innengewinde eingeschraubt wird. Im Anschluss daran wird der Gewindedorn mit einer ersten Kraft axial verschoben, sodass sich der zweite Verformungsabschnitt verformt und den Setzkopf ausbildet, wobei diese erste Kraft geringer ist als die Kraft, die zur Ausbildung des zweiten Schließkopfs notwendig ist. Im Anschluss daran wird der Gewindedorn mit einer zweiten Kraft axial verschoben, wobei bei diesem Verschieben eine Verformung des dritten Verformungsabschnitts erfolgt und sich somit der zweite Schließkopf ausbildet. Es ist aber auch durchaus denkbar, mit einer konstanten Kraft auf den Schaft einzuwirken, wobei aufgrund der geringeren Widerstandskraft des zweiten Verformungsabschnitts zunächst der Setzkopf und im Anschluss daran der zweite Schließkopf gebildet wird.

Insbesondere ist die zur Bildung des zweiten Schließkopfes aufzubringende Kraft geringer als eine zur Bildung des ersten Schließkopfs aufzubringende Kraft

In einer bevorzugten Ausführungsform weist der Schaft in einem zentralen Umfangsbereich des ersten Verformungsabschnitts und/oder des zweiten Verformungsabschnitts und/oder des dritten Verformungsabschnitts eine Schwächung der Wandung mittels mehrerer Löcher im Schaft auf, zur Ausbildung des ersten Schließkopfs bzw. des Setzkopfs bzw. des zweiten Schließkopfs in Form eines umlaufenden Wulsts nach dem Verformen des jeweiligen Verformungsabschnitts. Durch die Schwächung in dem zentralen Umfangsbereich des jeweiligen Verformungsabschnitts wird die Wandung des Schafts in diesem diskreten Bereich, zur Knickvorbereitung, labilisiert. Das Knicken des Verformungsabschnitts nach außen soll somit an den durch die Schwächung bestimmten Stellen beginnen.

Vorzugsweise weist der Schaft ausschließlich in einem zentralen Umfangsbereich des jeweiligen Verformungsabschnitts die Löcher im Schaft auf. Dementsprechend verbleibt die Wandung des Schafts in den anderen Bereichen ungeschwächt, womit dort die gesamte Wandstärke zur Verfügung steht.

Vorzugsweise sind die Löcher auf einem Umfangkreis des Schafts angeordnet, dessen Kreisebene senkrecht zu einer Schaftlängsachse angeordnet ist.

Vorzugsweise durchsetzen die Löcher den Schaft.

Als besonders vorteilhaft wird es angesehen, wenn ein axialer Abstand der Schwächung des ersten Verformungsabschnitts von dem Innengewinde bzw. dem Verbindungsabschnitt für den Gewindebolzen kleiner ist als ein axialer Abstand der Schwächung des ersten Verformungsabschnitts vom Kopfabschnitt. Dadurch wird die Ausbildung des ersten Schließkopfes benachbart des Innengewindes bzw. des Verbindungsabschnitts für den Gewindebolzen begünstigt. Dabei ist insbesondere vorgesehen, dass ein Anteil des ersten Verformungsabschnitts, welcher zwischen der Schwächung des ersten Verformungsabschnitts, insbesondere den Löchern, und dem Kopfabschnitt ausgebildet ist, eine größere axiale Abmessung aufweist, als ein Anteil des ersten Verformungsabschnitts, welcher zwischen der Schwächung des ersten Verformungsabschnitts, insbesondere den Löchern, und dem Innengewinde bzw. dem Verbindungsabschnitt für den Gewindebolzen angeordnet ist. Dadurch dass der Abstand der Schwächung des ersten Verformungsabschnitts vom Innengewinde bzw. dem Verbindungsabschnitt für den Gewindebolzen kleiner ist als der Abstand vom Kopfabschnitt, wird begünstigt, dass bei einem Verformen des ersten Verformungsabschnitts die Verformung benachbart des Innengewindes bzw. dem Verbindungsabschnitt beginnt und sich somit der erste Schließkopf benachbart des Innengewindes ausbildet, wobei beim fortschreitenden Verformen des Verformungsabschnitts der erste Schließkopf aus dem Bereich des Schafts gebildet wird, der zwischen der Schwächung des ersten Verformungsabschnitts und dem Kopfabschnitt angeordnet ist. Dadurch wird begünstigt, dass sich beim Verformen des ersten Verformungsabschnitts ein Abstand des Kopfabschnitts von dem sich ausbildenden Schließkopf verringert, insbesondere sich beim Verformen des ersten Verformungsabschnitts ein axialer Abstand des Kopfabschnitts von dem einen Abschnitt der zwei Abschnitte verringert, wohingegen sich beim Verformen des ersten Verformungsabschnitts eine Lage des Innengewindes bzw. des Verbindungsabschnitts für den Gewindebolzen bezüglich der Abschnitte nicht oder nur geringfügig verändert

Insbesondere ist vorgesehen, dass die Wandstärke im Bereich des Innengewindes bzw. im Bereich des Verbindungsabschnitts für den Gewindebolzen größer ist als in den angrenzenden Bereichen, insbesondere größer ist als im Bereich des ersten Verformungsabschnitts und im Bereich des dritten Verformungsabschnitts. Dadurch wird vermieden, dass beim Setzen eine Verformung im Bereich des Innengewindes bzw. des Verbindungsabschnitts auftritt.

Es wird als zweckmäßig angesehen, wenn der Außendurchmesser des Schafts des Blindnietelements konstant ist.

Vorzugsweise ist der Schaft als Hohlzylinder ausgebildet, insbesondere ist der Schaft als hohler Kreiszylinder ausgebildet.

In einer bevorzugten Ausführungsform weist die Wandung im Bereich des zweiten Verformungsabschnitts eine geringere Wandstärke auf als in einem in Richtung des Kopfabschnitts an den zweiten Verformungsabschnitt angrenzenden Bereich des Schafts. Durch die geringere Wandstärke ist die Schwächung gebildet.

In einer bevorzugten Weiterbildung weist das Blindnietelement eine das Blindnietelement in der axialen Richtung durchsetzende Durchgangsöffnung auf. Bei einer derartigen Ausführungsform ist beispielsweise das Innengewinde eines als Blindnietmutter ausgebildeten Blindnietelements von beiden Seiten aus zur Bildung einer Schraubverbindung zugänglich. In einer anderen Ausführungsform durchsetzt der Gewindebolzen des als Blindnietgewindebolzen ausgebildeten Blindnietelements die Durchgangsöffnung, so dass dieser von beiden Seiten aus zur Bildung einer Schraubverbindung zugänglich ist. Folglich kann das Innengewinde bzw. der Gewindebolzen sowohl von der Seite des einen Abschnitts aus als auch von der Seite des anderen Abschnitts aus für eine Schraubverbindung verwendet werden.

In einer bevorzugten Ausführungsform weist der Schaft im Bereich des ersten Verformungsabschnitts auf seiner Außenseite eine Strukturierung auf, insbesondere in Form von axial verlaufenden Furchen.

Es wird als zweckmäßig angesehen, wenn die Setzlöcher axial fluchtend ausgebildet sind.

Vorzugsweise erfolgt das Verformen eines als Blindnietmutter ausgebildeten Blindnietelements mittels eines Werkzeugs, welches einen rotierbaren und axial verschiebbaren Gewindedorn aufweist. Hierzu wird der Gewindedorn in das Innengewinde der Blindnietmutter eingeschraubt und dann axial so verschoben, dass eine Stauchung des entsprechenden Verformungsabschnitts erfolgt und sich somit der erste Setzkopf bzw. der erste Schließkopf bzw. der zweite Schließkopf ausbilden und die Blindnietmutter sowohl in dem einen Abschnitt als auch in dem anderen Abschnitt verankern. Das Setzen eines als Blindnietgewindebolzen ausgebildeten Blindnietelements erfolgt entsprechend dem Setzen der Blindnietmutter, mit dem Unterschied, dass unmittelbar am Gewindebolzen gezogen wird.

In einer vorteilhaften Weiterbildung des Verfahrens erfolgt das Verformen des zweiten Verformungsabschnitts und/oder des dritten Verformungsabschnitts von der dem Kopfabschnitt abgewandten Seite des Blindnietelements aus.

Das Verformen des ersten Verformungsabschnitts erfolgt vorzugsweise von der den Kopfabschnitt aufweisenden Seite-Kopfabschnittsseite - des Blindnietelements aus.

Vorzugsweise erfolgt das Verformen des jeweiligen Verformungsabschnitts durch Einbringen einer Zugkraft in den Schaft.

Als besonders vorteilhaft wird es angesehen, wenn nach dem Verformen des dritten Verformungsabschnitts und/oder des zweiten Verformungsabschnitts der Kopfabschnitt in der axialen Richtung beabstandet zu dem einen Abschnitt der zwei Abschnitte angeordnet ist.

In einer vorteilhaften Weiterbildung des Verfahrens ist der andere Abschnitt der zwei Abschnitte nach dem Verformen des zweiten Verformungsabschnitts und dem Verformen des dritten Verformungsabschnitts klemmend zwischen dem Setzkopf und dem zweiten Schließkopf gehalten. Dementsprechend ist eine Relativbewegung von dem anderen Abschnitt zu dem Blindnietelement in der axialen Richtung verhindert.

Es wird als besonders vorteilhaft angesehen, wenn vor dem Verformen des dritten Verformungsabschnitts der die Schwächung der Wandung aufweisende Bereich des ersten Verformungsabschnitts, insbesondere der erste Verformungsabschnitt, außerhalb eines zwischen den zwei Abschnitten ausgebildeten Zwischenbereichs angeordnet ist und nach dem Verformen des dritten Verformungsabschnitts der die Schwächung der Wandung aufweisende Bereich des ersten Verformungsabschnitts, insbesondere der erste Verformungsabschnitt, in dem Zwischenbereich angeordnet ist. Folglich verändert sich eine axiale Abmessung des Schafts beim Verformen des dritten Verformungsabschnitts derart, dass der erste Verformungsabschnitt in Richtung des anderen Abschnitts, folglich in den Zwischenbereich hinein, verschoben wird.

Insbesondere ist vorgesehen, dass nach dem Verformen des dritten Verformungsabschnitts eine axiale Abmessung des Bereichs des ersten Verformungsabschnitts, welcher in dem Zwischenbereich angeordnet ist, geringer ist als eine axiale Abmessung des Bereichs des ersten Verformungsabschnitts, der außerhalb des Zwischenbereichs angeordnet ist. Dadurch wird begünstigt, dass beim Verformen des ersten Verformungsabschnitts zwecks Bildung des ersten Schließkopfes der Kopfabschnitt in Richtung des einen Abschnitts der zwei Abschnitte verschoben wird, folglich zur Bildung des ersten Schließkopfes im Wesentlichen die Bereiche des ersten Verformungsabschnitts beitragen, welche außerhalb des Zwischenbereichs angeordnet sind.

Um zu verhindern, dass sich beim Setzen des Blindnietelements der Abstand der beiden beabstandet angeordneten Abschnitte verändert, beispielsweise die Abschnitte durch das Setzen des Blindnietelements zusammengepresst werden, wird es als besonders vorteilhaft angesehen, wenn das Verformen des ersten Verformungsabschnitts ohne oder im Wesentlichen ohne eine axiale Längenänderung des Bereichs des Schafts erfolgt, welcher in dem Zwischenbereich zwischen den zwei Abschnitten angeordnet ist. Beim Verformen des ersten Verformungsabschnitts ist somit der in dem Zwischenraum angeordnete Bereich des Schafts frei oder im Wesentlichen frei von einer axialen Längenänderung.

Um ein axiales Spiel zwischen dem gesetzten Blindnietelement und dem einen Abschnitt der zwei Abschnitte und/oder dem anderen Abschnitt der zwei Abschnitte zu vermeiden, wird es als vorteilhaft angesehen, wenn sich der axiale Abstand zwischen dem Kopfabschnitt und dem einen Abschnitt beim Verformen des ersten Verformungsabschnitts und/oder des zweiten Verformungsabschnitts und/oder des dritten Verformungsabschnitts verringert. Vorzugsweise kontaktiert der Kopfabschnitt nach dem Verformen des ersten Verformungsabschnitts den einen Abschnitt.

In den Figuren ist die Erfindung anhand mehrere Ausführungsformen dargestellt, ohne hierauf beschränkt zu sein.

Es zeigt:
- Fig. 1: eine erste Ausführungsform eines erfindungsgemäßen Blindnietelements, wobei das Blindnietelement als Blindnietmutter ausgebildet ist, in einer Schnittansicht,
- Fig. 2: das Blindnietelement gemäß Fig. 1 in einer perspektivischen Ansicht,
- Fig. 3: eine Anordnung des Blindnietelements gemäß Fig. 1 und eines Hohlkörpers in einem Zustand, in welchem das Blindnietelement teilweise in den Hohlkörper eingeführt ist, in einer Schnittansicht wie in Fig. 1,
- Fig. 4: die Anordnung gemäß Fig. 3 in einem Zustand, in welchem das Blindnietelement den Hohlkörper vollständig durchsetzt und ein Gewindedorn eines Werkzeugs in das Blindnietelement eingeschraubt ist, in einer Schnittansicht wie in Fig. 3,
- Fig. 5: die Anordnung gemäß Fig. 4 in einem Zustand nach einem Ausbilden eines Setzkopfes, in einer Schnittansicht wie in Fig. 3,
- Fig. 6: die Anordnung gemäß Fig. 5 in einem Zustand nach einem Ausbilden eines zweiten Schließkopfes, in einer Schnittansicht wie in Fig. 3,
- Fig. 7: die Anordnung gemäß Fig. 6, wobei ein Gewindedorn eines Werkzeugs mit dem Blindnietelement verbunden ist, in einer Schnittansicht wie in Fig. 3,
- Fig. 8: die Anordnung gemäß Fig. 6 in einem Zustand nach einem Ausbilden eines ersten Schließkopfes, in einer Schnittansicht wie in Fig. 3,
- Fig. 9: eine Anordnung von einem Hohlkörper und dreien in den Hohlkörper eingebrachten Blindnietelementen gemäß Fig. 1, wobei die drei Blindnietelemente jeweils unterschiedliche Zustände des Blindnietelements beim Vorgang des Ausbildens des ersten Schließkopfes zeigen, in einer Schnittansicht,
- Fig. 10: eine Anordnung von einem Hohlkörper und zweien in den Hohlkörper gesetzten Blindnietelementen gemäß Fig. 1, wobei mittels jeweils einer in das jeweilige Blindnietelement eingeschraubten Schraube jeweils ein weiteres Bauteil mit dem Hohlkörper verbunden ist, in einer Schnittansicht,
- Fig. 11: eine weitere Ausführungsform des Blindnietelements, wobei das Blindnietelement als Blindnietgewindebolzen ausgebildet ist, in einer Ansicht gemäß dem Pfeil XI in Fig. 12,
- Fig. 12: das Blindnietelement in einer Schnittansicht gemäß der Linie XII-XII in Fig. 11,
- Fig. 13: das Blindnietelement gemäß Fig. 11 in einer perspektivischen Ansicht,
- Fig. 14: eine Anordnung von einem Hohlkörper und dem Blindnietelement gemäß Fig. 11 nach dem Setzen des Blindnietelements,
- Fig. 15: ein Mundstück des in der Fig. 4 dargestellten Werkzeugs in einer perspektivischen Ansicht.

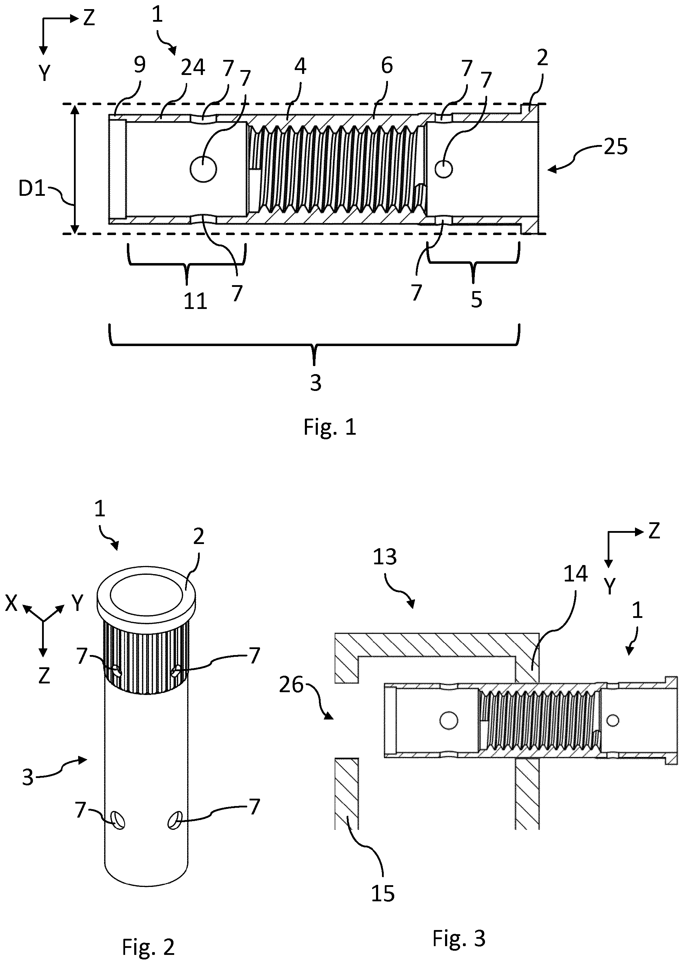

Das in den Fig. 1 bis 10 dargestellte Blindnietelement 1 dient dem Versteifen von zwei beabstandet angeordneten Abschnitten 14, 15 zweier Bauteile oder eines Bauteils. Vorliegend handelt es sich bei den zwei Abschnitten 14, 15 um zwei gegenüberliegenden Wandungen eines Hohlkörpers 13.

Das Blindnietelement 1 weist einen Kopfabschnitt 2 und einen in eine axiale Richtung Z des Blindnietelements 1 an den Kopfabschnitt 2 angrenzenden Schaft 3 auf, wobei der Schaft 3 ein Innengewinde 4 aufweist, folglich das Blindnietelement 1 als Blindnietmutter ausgebildet ist. Der Kopfabschnitt 2 weist einen größeren Außendurchmesser D1 als der Schaft 3 auf. Zwischen dem Innengewinde 4 und dem Kopfabschnitt 2 weist der Schaft 3 einen ersten Verformungsabschnitt 5 auf, wobei eine Wandung 6 des Schafts 3 im Bereich des ersten Verformungsabschnitts 5 eine durch Löcher 7 gebildete Schwächung aufweist, zur Ausbildung eines ersten Schließkopfes 8 auf einer dem Kopfabschnitt 2 abgewandten Seite des einen Abschnitts 14 der zwei Abschnitte 14, 15 nach einem Verformen des ersten Verformungsabschnitts 5.

Der Schaft 3 weist einen zweiten Verformungsabschnitt 9 auf, wobei vorliegend der zweite Verformungsabschnitt 9 an einem dem Kopfabschnitt 2 abgewandten Ende des Schafts 3 ausgebildet ist. Die Wandung 6 des Schafts 3 weist im Bereich des zweiten Verformungsabschnitts 9 wiederum eine Schwächung auf, zur Ausbildung eines Setzkopfes 10 auf einer dem Kopfabschnitt 2 abgewandten Seite des anderen Abschnitts 15 der zwei Abschnitte 14, 15 nach einem Verformen des zweiten Verformungsabschnitts 9. Konkret weist die Wandung 6 des Schafts 3 im Bereich des zweiten Verformungsabschnitts 9 eine geringere Wandstärke auf als in einem in Richtung des Kopfabschnitts 2 an den zweiten Verformungsabschnitt 9 angrenzenden Bereich 24 des Schafts 3. Durch die geringere Wandstärke ist die Schwächung des zweiten Verformungsabschnitts 9 gebildet. Da der zweite Verformungsabschnitt 9 an dem dem Kopfabschnitt 2 abgewandten Ende des Schafts 3 ausgebildet ist, ist das Innengewinde 4 dementsprechend zwischen dem ersten Verformungsabschnitt 5 und dem zweiten Verformungsabschnitt 9 ausgebildet.

Der Schaft 3 weist ferner zwischen dem Innengewinde 4 und dem zweiten Verformungsabschnitt 9 einen dritten Verformungsabschnitt 11 auf, wobei die Wandung 6 des Schafts 3 im Bereich des dritten Verformungsabschnitts 11 eine wiederum durch Löcher 7 gebildete Schwächung aufweist, zur Ausbildung eines zweiten Schließkopfes 12 auf einer dem Kopfabschnitt 2 zugewandten Seite des anderen Abschnitts 15 der zwei Abschnitte 14, 15 nach einem Verformen des dritten Verformungsabschnitts 11. Der dritte Verformungsabschnitt 11 grenzt vorliegend unmittelbar an den zweiten Verformungsabschnitt 9 an.

Vorliegend ist das Blindnietelement 1 einstückig ausgebildet und besteht vorzugsweise aus einem Metall.

Der Schaft 3 des Blindnietelements 1 ist im Wesentlichen als hohler Kreiszylinder ausgebildet, wobei der Schaft 3 im Bereich des Innengewindes 4 die größte Wandstärke aufweist.

Die jeweilige Schwächung des Schafts 3 im Bereich des ersten Verformungsabschnitts 5 und des zweiten Verformungsabschnitts 9 ist konkret durch vier den Schaft 3 durchsetzende Löcher 7 gebildet, wobei diese Löcher 7 jeweils in einem zentralen Umfangsbereich des ersten Verformungsabschnitts 5 bzw. des dritten Verformungsabschnitts 11 ausgebildet sind. Dadurch wird die Ausbildung des ersten Schließkopfes 8 bzw. des zweiten Schließkopfes 12 in Form eines umlaufenden Wulsts nach dem Verformen des jeweiligen Verformungsabschnitts 5, 11 begünstigt.

Die Löcher 7 weisen im Bereich des dritten Verformungsabschnitts 11 einen größeren Durchmesser auf als die Löcher 7 im Bereich des ersten Verformungsabschnitts 5. Ein axialer Abstand der Löcher 7 des ersten Verformungsabschnitts 5 von dem Innengewinde 4 ist kleiner als ein axialer Abstand dieser Löcher 7 von dem Kopfabschnitt 2.

Im Bereich des ersten Verformungsabschnitts 5 weist der Schaft 3 auf seiner Außenseite eine Strukturierung in Form von axial verlaufenden Furchen auf.

Das Blindnietelement 1 weist eine das Blindnietelement 1 in der axialen Richtung Z durchsetzende Durchgangsöffnung 25 auf, sodass das Innengewinde 4 sowohl von der Seite des Kopfabschnitts 2 als auch von der dem Kopfabschnitt 2 abgewandten Seite des Blindnietelements 1 aus zugänglich ist. Dadurch kann beispielsweise eine Schraube 18 von beiden Seiten des Blindnietelements 1 aus in das Innengewinde 4 eingeschraubt werden, zwecks Bildung einer Schraubverbindung.

Das Setzen des Blindnietelements 1 in die zwei beabstandet angeordneten Abschnitte 14, 15 zweier Bauteile oder eines Bauteils, vorliegend in die Wandungen des Hohlkörpers 13, erfolgt vorzugsweise derart, dass zunächst jeweils ein Setzloch 26 in die Abschnitte 14, 15 eingebracht wird. Es ist aber auch durchaus denkbar, dass die Abschnitte 14, 15 bereits jeweils ein Setzloch 26 aufweisen. Vorzugsweise sind die Setzlöcher 26 axial fluchtend ausgebildet.

Die Setzlöcher 26 weisen einen identischen Durchmesser auf, wobei dieser Durchmesser kleiner ist, als der Durchmesser des Kopfabschnitts 2. Es ist aber durchaus denkbar, dass die Setzlöcher 26 unterschiedliche Durchmesser aufweisen, wodurch ein Toleranzausgleich senkrecht zu der axialen Richtung Z möglich ist.

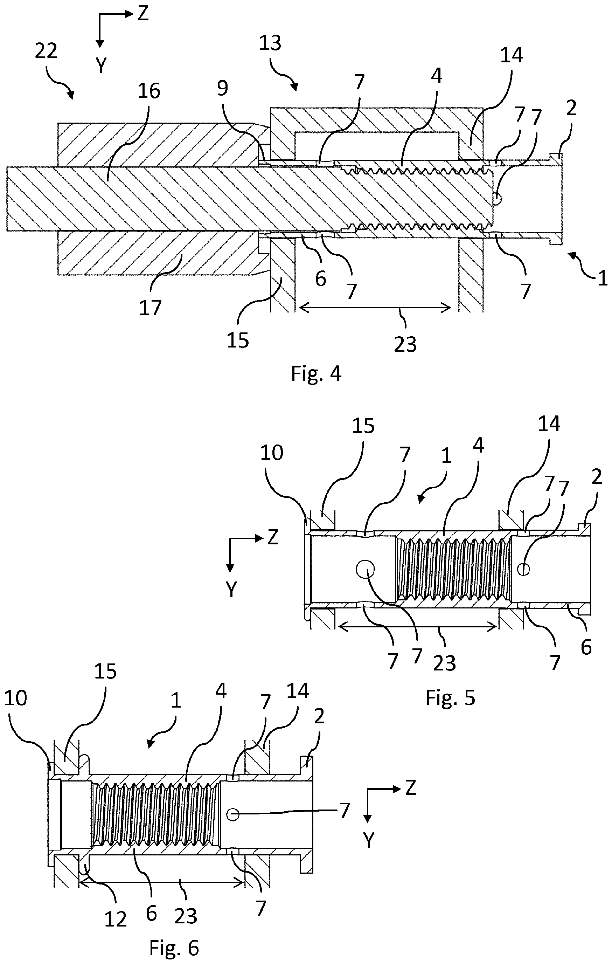

Zwecks Setzens des Blindnietelements 1 wird der Schaft 3 des Blindnietelements 1 in die beiden Abschnitte 14, 15 derart eingeführt, dass der Schaft 3 die beiden Setzlöcher 26 durchsetzt, wobei der Kopfabschnitt 2 auf einer dem anderen Abschnitt 15 abgewandten Seite des einen Abschnitts 14 in der axialen Richtung Z beabstandet zu dem einen Abschnitt 14 angeordnet ist und der zweite Verformungsabschnitt 9 auf einer dem einen Abschnitt 14 abgewandten Seite des anderen Abschnitts 15 gegenüber dem anderen Abschnitt 15 in der axialen Richtung Z hervorsteht. Der Vorgang des Einführens des Schafts 3 des Blindnietelements 1 ist in den Fig. 3 und 4 dargestellt, wobei der Schaft 3 des Blindnietelements 1 in dem in der Fig. 3 dargestellten Zustand lediglich das Setzloch 26 des einen Abschnitts 14 und somit lediglich den einen Abschnitt 14 durchsetzt. Indem das Blindnietelement 1 ausgehend von dem in der Fig. 3 dargestellten Zustand weiter in Richtung des zweiten Abschnitts 15 verschoben wird, durchsetzt der Schaft 3 auch das Setzloch 26 des zweiten Abschnitts 15, wie dies in der Fig. 4 dargestellt ist.

Im Anschluss an das Einführen des Schafts 3 des Blindnietelements 1 in die beiden Setzlöcher 26 der zwei Abschnitte 14, 15 wird der zweite Verformungsabschnitt 9 derart verformt, dass dieser auf der dem einen Abschnitt 14 abgewandten Seite des anderen Abschnitts 15 den Setzkopf 10 ausbildet. Dieser Zustand des Blindnietelements 1 mit ausgebildetem Setzkopf 10 ist in der Fig. 5 dargestellt.

Im Anschluss daran wird der dritte Verformungsabschnitt 11 derart verformt, dass dieser auf der dem Setzkopf 10 abgewandten Seite des anderen Abschnitts 15 den zweiten Schließkopf 12 ausbildet. Dieser Zustand ist in der Fig. 6 dargestellt.

Vorzugsweise erfolgt das Verformen des zweiten Verformungsabschnitts 9 und des dritten Verformungsabschnitts 11 von der dem Kopfabschnitt 2 abgewandten Seite des Blindnietelements 1 aus. Vorliegend erfolgt das Verformen des zweiten Verformungsabschnitts 9 und des dritten Verformungsabschnitts 11 mittels eines Werkzeugs 22, wobei dieses Werkzeug 22 ein Mundstück 17 und einen das Mundstück 17 durchsetzenden Gewindedorn 16 aufweist. Zwecks Bildens des Setzkopfes 10 wird der Gewindedorn 16 in das Innengewinde 4 des Schafts 3 eingeschraubt und im Anschluss daran entgegengesetzt zu der Einschraubrichtung in der axialen Richtung Z verschoben. Bei diesem axialen Verschieben des Gewindedorns 16 kommt der Verformungsabschnitt 9 mit dem Mundstück 17 in Kontakt und wird aufgrund der durch den Gewindedorn 16 vermittelten Zugkraft an dem Mundstück 17 radial nach außen umgeformt, wodurch sich der umlaufende Setzkopf 10 ausbildet.

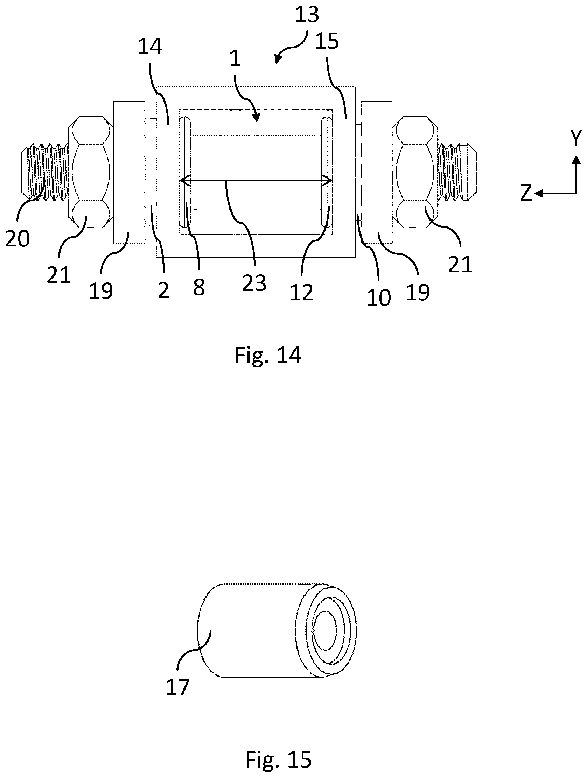

Das Mundstück 17 ist dabei derart gestaltet, dass dieses auf der dem Schaft 3 zugewandten Seite einen Rücksprung aufweist, wobei dieser Rücksprung derart ausgebildet ist, dass dieser den zweiten Verformungsabschnitt 9 und nach dem Verformen des zweiten Verformungsabschnitts 9 den Setzkopf 10 aufnimmt. Das Mundstück 17 als solches ist in der Fig. 15 dargestellt.

Die zur Bildung des Setzkopfes 10 aufzubringende Kraft ist vorzugsweise geringer als eine Kraft, die zur Bildung des zweiten Schließkopfes 12 notwendig ist. Dementsprechend wird bei einem axialen Verschieben des Gewindedorns 16 zunächst der Setzkopf 10 ausgebildet und bei einem weiteren Verschieben des Gewindedorns 16 der zweite Schließkopf 12 ausgebildet. Es ist auch durchaus denkbar, dass das Verschieben des Gewindedorns 16 zunächst mit einer ersten Kraft erfolgt, die ausreichend ist, um den zweiten Verformungsabschnitt 9 zu verformen, aber nicht ausreichend ist, um den dritten Verformungsabschnitt 11 zu verformen. Im Anschluss daran erfolgt die Bildung des zweiten Schließkopfes 12 dadurch, dass die Zugkraft des Gewindedorns 16 derart erhöht wird, dass diese Kraft ausreichend ist, um den dritten Verformungsabschnitt 11 zu verformen.

Das Verformen des zweiten Verformungsabschnitts 9 und des dritten Verformungsabschnitts 11 kann durchaus mit dem gleichen Werkzeug 22 erfolgen.

Wie insbesondere der Fig. 5 zu entnehmen ist, ist der Kopfabschnitt 2 nach dem Verformen des dritten Verformungsabschnitts 11 in der axialen Richtung Z beabstandet zu dem einen Abschnitt 14 angeordnet.

Nach dem Verformen des zweiten Verformungsabschnitts 9 und vor dem Verformen des dritten Verformungsabschnitts 11 ist der die Schwächung der Wandung 6 aufweisende Bereich des ersten Verformungsabschnitts 5, vorliegend die Löcher 7 des ersten Verformungsabschnitts 5, außerhalb eines zwischen den zwei Abschnitten 14, 15 ausgebildeten Zwischenbereichs 23 angeordnet. Beim Verformen des dritten Verformungsabschnitts 11 verringert sich die axiale Abmessung des Schafts 3, sodass ein in Richtung des Kopfabschnitts 2 an den dritten Verformungsabschnitt 11 angrenzender Bereich des Schafts 3 in Richtung des anderen Abschnitts 15 der zwei Abschnitte 14, 15 verschoben wird, wobei nach dem Verformen des dritten Verformungsabschnitts 11 der die Schwächung der Wandung 6 aufweisende Bereich des ersten Verformungsabschnitts 5, nämlich die Löcher 7 des ersten Verformungsabschnitts 5, in dem Zwischenbereich 23 angeordnet ist. Dies ist insbesondere einem Vergleich der Fig. 5 und 6 zu entnehmen.

Im Anschluss an das Verformen des dritten Verformungsabschnitts 11 wird der erste Verformungsabschnitt 5 derart verformt, dass dieser auf der dem Kopfabschnitt 2 abgewandten Seite des einen Abschnitts 14 den ersten Schließkopf 8 ausbildet.

Das Verformen des ersten Verformungsabschnitts 5 erfolgt von der dem Kopfabschnitt 2 aufweisenden Seite des Blindnietelements 1 aus. Zwecks Verformens wird wiederum das Werkzeug 22 mit dem Mundstück 17 und dem Gewindedorn 16 verwendet, wobei sich das Mundstück 17 von dem vorher verwendeten Mundstück 17 im Wesentlichen dadurch unterscheidet, dass dieses Mundstück 17 keinen Rücksprung aufweist.

Im Gegensatz zur Bildung des Setzkopfes 10 und des zweiten Schließkopfes 12 wird bei der Bildung des ersten Schließkopfes 8 beim axialen Verschieben des Gewindedorns 16 nicht der Gewindedorn 16 bezüglich der zwei Abschnitte 14, 15 verschoben, sondern, aufgrund der Tatsache, dass das Blindnietelement 1 durch den Setzkopf 10 in Verschieberichtung des Gewindedorns 16 axial an dem anderen Abschnitt 15 fixiert ist, konkret sich der Setzkopf 10 an dem anderen Abschnitt 15 abstützt, der den Gewindedorn 16 aufnehmende Bereich des Werkzeugs 22 gemeinsam mit dem Kopfabschnitt 2 in Richtung der zwei Abschnitte 14, 15 verschoben.

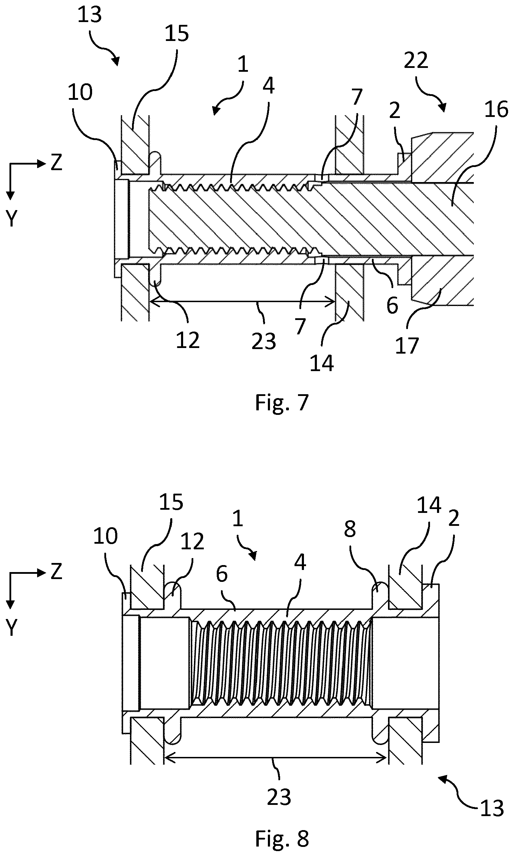

Wie insbesondere einem Vergleich der Fig. 7 mit der Fig. 8 zu entnehmen ist, erfolgt das Verformen des ersten Verformungsabschnitts 5 ohne oder im Wesentlichen ohne eine axiale Längenänderung des Bereichs des Schafts 3, welcher in dem Zwischenbereich 23 angeordnet ist. Insofern ist der in dem Zwischenraum 23 angeordnete Bereich des Schafts 3 beim Verformen des ersten Verformungsabschnitts 5 frei oder im Wesentlichen frei von einer axialen Längenänderung, wodurch sich der axiale Abstand der zwei Abschnitte 14, 15 beim Setzen des Blindnietelements 1 nicht oder nur unwesentlich verändert.

Wie insbesondere der Fig. 8 zu entnehmen ist, sind sowohl der eine Abschnitt 14 als auch der andere Abschnitt 15 der zwei Abschnitte 14, 15 nach dem Setzen des Blindnietelements 1 klemmend in dem Blindnietelement 1 gehalten, konkret ist der andere Abschnitt 15 klemmend zwischen dem Setzkopf 10 und dem zweiten Schließkopf 12 und der eine Abschnitt 14 klemmend zwischen dem Kopfabschnitt 2 und dem ersten Schließkopf 8 gehalten.

Beim Verformen des ersten Verformungsabschnitts 5 und beim Verformen des dritten Verformungsabschnitts 11 verringert sich der axiale Abstand zwischen dem Kopfabschnitt 2 und dem einen Abschnitt 14, wobei der Kopfabschnitt 2 nach dem Verformen des ersten Verformungsabschnitts 5 den einen Abschnitt 14 kontaktiert.

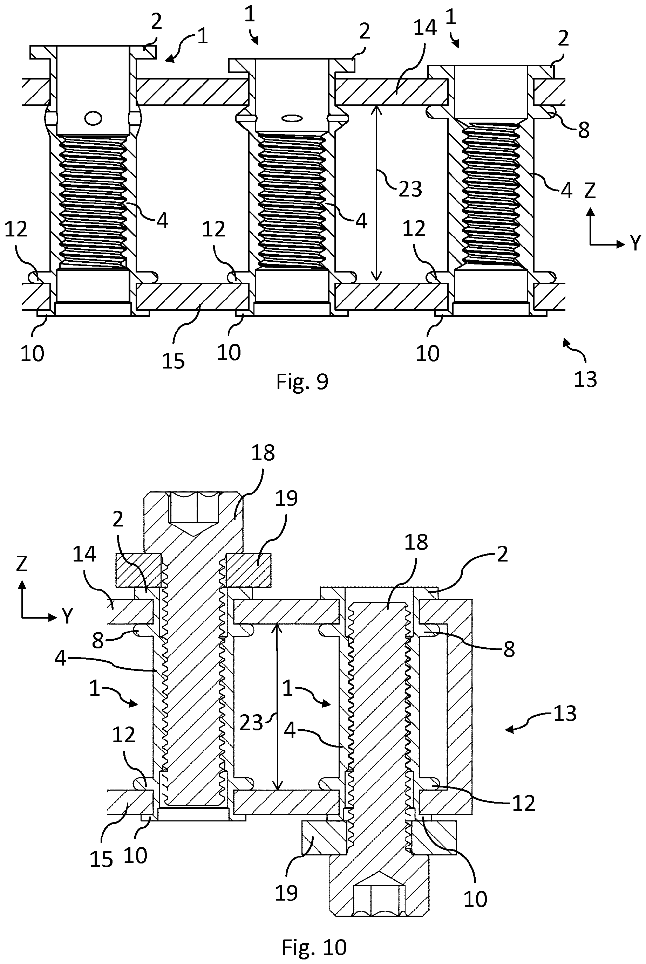

Der Vorgang des Ausbildens des ersten Schließkopfes 8 beim Verformen des ersten Verformungsabschnitts 5 ist in der Fig. 9 anhand von drei Verformungszuständen des ersten Verformungsabschnitts 5 dargestellt.

Mit dem Blindnietelement 1 ist es möglich, die zwei beabstandet angeordneten Abschnitte 14, 15 zu versteifen, ohne dass es dafür notwendig ist, ein weiteres Element einer Schraubverbindung, beispielsweise eine Schraube 18, mit dem Innengewinde 4 des Blindnietelements 1 zu verbinden. Vielmehr kann das Innengewinde 4 für eine Schraubverbindung verwendet werden, die nicht notwendigerweise dem Versteifen der zwei Abschnitte 14, 15 dient.

Das Innengewinde 4 ist sowohl von der Seite des Kopfabschnitts 2 als auch von der Seite des Setzkopfes 10 aus zugänglich, sodass die Schraube 18 sowohl von der einen Kopfabschnittseite als auch von der dem Kopfabschnitt 2 abgewandten Seite in das Innengewinde 4 eingeschraubt werden kann. Dies ist in der Fig. 10 dargestellt. Bei der in der Fig. 10 dargestellten Anordnung sind die beiden Blindnietelemente 1 in zwei gegenüberliegende Wandabschnitte 14, 15 des Hohlkörpers 13 gesetzt. Mittels der Schrauben 18, die in das Innengewinde 4 des jeweiligen Blindnietelements 1 eingeschraubt sind, ist jeweils ein weiteres Bauteil 19 mit dem Hohlkörper 13 verbunden ist. Dabei ist die dem einen Blindnietelement 1 zuzuordnende Schraube 18 des einen Blindnietelements von der Kopfabschnittseite aus in das eine Blindnietelement 1 und die dem anderen Blindnietelement 1 zuzuordnende Schraube 18 von der dem Kopfabschnitt 2 abgewandten Seite in das andere Blindnietelement 1 eingeschraubt.

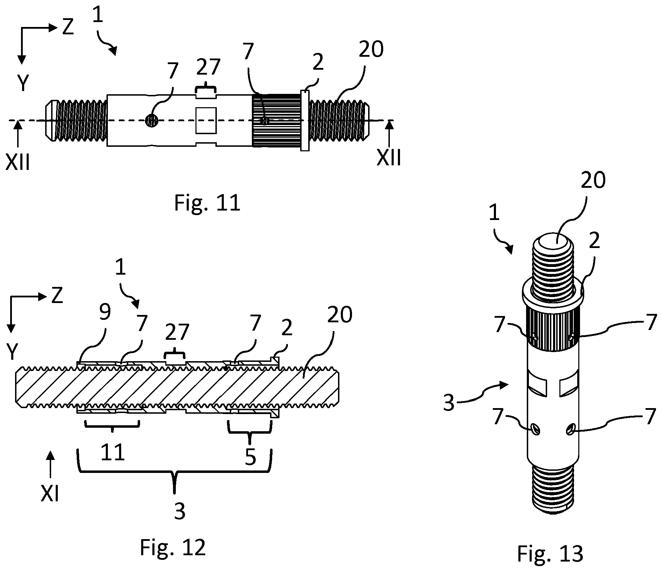

Das in den Fig. 11 bis 13 dargestellte zweite Ausführungsbeispiel des Blindnietelements 1 unterscheidet sich von dem vorigen Ausführungsbeispiel im Wesentlichen dadurch, dass das Blindnietelement 1 als Blindnietgewindebolzen ausgebildet ist, wobei das Blindnietelement 1 einen Gewindebolzen 20 aufweist, der in der axialen Richtung Z auf beiden Seiten gegenüber dem Schaft 3 bzw. dem Kopfabschnitt 2 hervorsteht. Der Schaft 3 weist einen Verbindungsabschnitt 27 auf, wobei der Gewindebolzen 20 im Bereich des Verbindungsabschnitts 27 mit dem Schaft 3 verbunden ist. Die Verbindung zwischen dem Gewindebolzen 20 und dem Schaft 3 im Bereich des Verbindungsabschnitts 27 ist durch eine Schweiß-Verbindung gebildet.

Die Fig. 14 zeigt das als Blindnietgewindebolzen ausgebildete Blindnietelement 1 in einem in den Hohlkörper 13 gesetzten Zustand, wobei sowohl auf der Kopfabschnittsseite als auch auf der Setzkopfseite des Blindnietelements 1 ein weiteres Bauteil 19 mittels einer auf den Gewindebolzen 20 aufgeschraubten Mutter 21 mit dem Hohlkörper 13 verbunden ist.

### Bezugszeichenliste

- 1: Blindnietelement
- 2: Kopfabschnitt
- 3: Schaft
- 4: Innengewinde
- 5: erster Verformungsabschnitt
- 6: Wandung
- 7: Loch
- 8: erster Schließkopf
- 9: zweiter Verformungsabschnitt
- 10: Setzkopfes
- 11: dritter Verformungsabschnitt
- 12: zweiter Schließkopf
- 13: Hohlkörper
- 14: Abschnitt
- 15: andere Abschnitt
- 16: Gewindedorn
- 17: Mundstück
- 18: Schraube
- 19: weiteres Bauteil
- 20: Gewindebolzen
- 21: Mutter
- 22: Werkzeug
- 23: Zwischenbereich
- 24: Bereich
- 25: Durchgangsöffnung
- 26: Setzloch
- 27: Verbindungsabschnitt

- D1: Durchmesser

## Patentansprüche

1. Verfahren zum Setzen eines Blindnietelements (1) in zwei beabstandet angeordnete Abschnitte (14, 15) zweier Bauteile oder eines Bauteils zum Versteifen der zwei beabstandet angeordneten Abschnitte (14, 15) der zwei Bauteile oder des einen Bauteils, insbesondere zum Versteifen von zwei die Abschnitte (14, 15) bildenden gegenüberliegenden Wandungen eines Hohlkörpers (13), wobei das Verfahren die folgenden Verfahrensschritte aufweist:
a) Bereitstellen des Blindnietelements (1), des einen Abschnitts (14) und des anderen Abschnitts (15) der beiden beabstandet angeordneten Abschnitte (14, 15), wobei das Blindnietelement (1) einen Kopfabschnitt (2) und einen in einer axialen Richtung (Z) des Blindnietelements (1) an den Kopfabschnitt (2) angrenzenden Schaft (3) aufweist, wobei der Schaft (3) ein Innengewinde (4) oder einen Verbindungsabschnitt (27) für einen Gewindebolzen (20) und zwischen dem Innengewinde (4) bzw. dem Verbindungsabschnitt (27) für den Gewindebolzen (20) und dem Kopfabschnitt (2) einen ersten Verformungsabschnitt (5) aufweist, wobei der Kopfabschnitt (2) einen größeren Außendurchmesser (D1) als der Schaft (3) aufweist, wobei eine Wandung (6) des Schafts (3) im Bereich des ersten Verformungsabschnitts (5) eine Schwächung aufweist, zur Ausbildung eines ersten Schließkopfes (8) auf einer dem Kopfabschnitt (2) abgewandten Seite des einen Abschnitts (14) der zwei Abschnitte (14, 15) nach einem Verformen des ersten Verformungsabschnitts (5), wobei der Schaft (3) einen zweiten Verformungsabschnitt (9) aufweist, wobei die Wandung (6) des Schafts (3) im Bereich des zweiten Verformungsabschnitts (9) eine Schwächung aufweist, zur Ausbildung eines Setzkopfes (10) auf einer dem Kopfabschnitt (2) abgewandten Seite des anderen Abschnitts (15) der zwei Abschnitte (14, 15) nach einem Verformen des zweiten Verformungsabschnitts (9), wobei das Innengewinde (4) bzw. der Verbindungsabschnitt (27) für den Gewindebolzen (20) zwischen dem ersten Verformungsabschnitt (5) und dem zweiten Verformungsabschnitt (9) ausgebildet ist, wobei der Schaft (3) zwischen dem Innengewinde (4) bzw. dem Verbindungsabschnitt (27) für den Gewindebolzen (20) und dem zweiten Verformungsabschnitt (9) einen dritten Verformungsabschnitt (11) aufweist, wobei die Wandung (6) des Schafts (3) im Bereich des dritten Verformungsabschnitts (11) eine Schwächung aufweist, zur Ausbildung eines zweiten Schließkopfes (12) auf einer dem Kopfabschnitt (2) zugewandten Seite des anderen Abschnitts (15) der zwei Abschnitte (14, 15) nach einem Verformen des dritten Verformungsabschnitts (11),
b) Einbringen von jeweils einem Setzloch (26) in die Abschnitte (14, 15),
c) Einführen des Schafts (3) des Blindnietelements (1) in die beiden Abschnitte (14, 15) derart, dass der Schaft (3) die beiden Setzlöcher (26) durchsetzt, wobei der Kopfabschnitt (2) auf einer dem anderen Abschnitt (15) abgewandten Seite des einen Abschnitts (14) in der axialen Richtung (Z) beabstandet zu dem einen Abschnitt (14) angeordnet ist und der zweite Verformungsabschnitt (9) auf einer dem einen Abschnitt (14) abgewandten Seite des anderen Abschnitts (15) angeordnet ist,
d) Verformen des zweiten Verformungsabschnitts (9) derart, dass dieser auf der dem Kopfabschnitt (2) abgewandten Seite des anderen Abschnitts (15) den Setzkopf (10) ausbildet,
e) Verformen des dritten Verformungsabschnitts (11) derart, dass dieser auf der dem Kopfabschnitt (2) zugewandten Seite des anderen Abschnitts (15) den zweiten Schließkopf (12) ausbildet,
f) Verformen des ersten Verformungsabschnitts (5) derart, dass dieser auf der dem Kopfabschnitt (2) abgewandten Seite des einen Abschnitts (14) den ersten Schließkopf (8) ausbildet,
wobei die Verfahrensschritte d), e) und f) in der angegebenen Reihenfolge erfolgen.

2. Verfahren nach Anspruch 1, wobei das Verformen des zweiten Verformungsabschnitts (9) und/oder des dritten Verformungsabschnitts (11) von der dem Kopfabschnitt (2) abgewandten Seite des Blindnietelements (1) aus erfolgt.

3. Verfahren nach Anspruch 1 oder 2, wobei das Verformen des ersten Verformungsabschnitts (5) von der den Kopfabschnitt (2) aufweisenden Seite des Blindnietelements (1) aus erfolgt.

4. Verfahren nach einem der Ansprüche 1 bis 3, wobei nach dem Verformen des dritten Verformungsabschnitts (11) und/oder des zweiten Verformungsabschnitts (9) der Kopfabschnitt (2) in der axialen Richtung (Z) beabstandet zu dem einen Abschnitt (14) angeordnet ist.

5. Verfahren nach einem der Ansprüche 1 bis 4, wobei nach dem Verformen des zweiten Verformungsabschnitts (9) und des dritten Verformungsabschnitts (11) der andere Abschnitt (15) klemmend zwischen dem Setzkopf (10) und dem zweiten Schließkopf (12) gehalten ist.

6. Verfahren nach einem der Ansprüche 1 bis 5, wobei vor dem Verformen des dritten Verformungsabschnitts (11) ein die Schwächung der Wandung (6) aufweisender Bereich des ersten Verformungsabschnitts (5), insbesondere der erste Verformungsabschnitt (5), außerhalb eines zwischen den zwei Abschnitten (14, 15) ausgebildeten Zwischenbereichs (23) angeordnet ist und nach dem Verformen des dritten Verformungsabschnitts (11) der die Schwächung der Wandung (6) aufweisende Bereich des ersten Verformungsabschnitts (5), insbesondere der erste Verformungsabschnitt (5), in dem Zwischenbereich (23) angeordnet ist.

7. Verfahren nach einem der Ansprüche 1 bis 6, wobei nach dem Verformen des dritten Verformungsabschnitts (11) eine axiale Abmessung des Bereichs des ersten Verformungsabschnitts (5), welcher in dem Zwischenbereich (23) angeordnet ist, geringer ist als eine axiale Abmessung des Bereichs des ersten Verformungsabschnitts (5), der außerhalb des Zwischenbereichs (23) angeordnet ist.

8. Verfahren nach einem der Ansprüche 2 bis 7, wobei das Verformen des ersten Verformungsabschnitts (5) ohne oder im Wesentlichen ohne eine axiale Längenänderung des Bereichs des Schafts (3) erfolgt, welcher in dem Zwischenbereich (23) angeordnet ist.

9. Verfahren nach einem der Ansprüche 1 bis 8, wobei sich der axiale Abstand zwischen dem Kopfabschnitt (2) und dem einen Abschnitt (14) beim Verformen des ersten Verformungsabschnitts (5) und/oder des zweiten Verformungsabschnitts (9) und/oder des dritten Verformungsabschnitts (11) verringert, insbesondere der Kopfabschnitt (2) nach dem Verformen des ersten Verformungsabschnitts (5) den einen Abschnitt (14) kontaktiert.

10. Verfahren nach einem der Ansprüche 1 bis 9, wobei eine zur Bildung des Setzkopfes (10) aufzubringende Kraft geringer ist als eine zur Bildung des zweiten Schließkopfes (12) aufzubringende Kraft.

11. Verfahren nach einem der Ansprüche 1 bis 10, wobei der Schaft (3) in einem zentralen Umfangsbereich des ersten Verformungsabschnitts (5) und/oder des zweiten Verformungsabschnitts (9) und/oder des dritten Verformungsabschnitts (11) eine Schwächung der Wandung (6) mittels mehrerer Löcher (7) im Schaft (3) aufweist, zur Ausbildung des ersten Schließkopfes (8) bzw. des Setzkopfes (10) bzw. des zweiten Schließkopfes (12) in Form eines umlaufenden Wulsts nach dem Verformen des jeweiligen Verformungsabschnitts (5, 9, 11).

12. Verfahren nach einem der Ansprüche 1 bis 11, wobei der Außendurchmesser des Schafts (3) des Blindnietelements (1) konstant ist.

13. Verfahren nach einem der Ansprüche 1 bis 12, wobei die Wandung (6) im Bereich des zweiten Verformungsabschnitts (9) eine geringere Wandstärke aufweist als in einem in Richtung des Kopfabschnitts (2) an den zweiten Verformungsabschnitt (9) angrenzenden Bereich (24) des Schafts (3).

14. Verfahren nach einem der Ansprüche 1 bis 13, wobei das Blindnietelement (1) eine das Blindnietelement (1) in der axialen Richtung (Z) durchsetzende Durchgangsöffnung (25) aufweist.

## Claims

1. Method for setting a blind rivet element (1) into two spaced-apart portions (14, 15) of two components or of one component for stiffening the two spaced-apart portions (14, 15) of the two components or of the one component, in particular for stiffening two opposite walls of a hollow body (13) which form the portions (14, 15),
wherein the method comprises the following method steps:
a) Providing the blind rivet element (1), the one portion (14) and the other portion (15) of the two spaced-apart portions (14, 15), wherein the blind rivet element (1) has a head portion (2) and a shank (3) which adjoins the head portion (2) in an axial direction (Z) of the blind rivet element (1), wherein the shank (3) has an internal thread (4) or a connecting portion (27) for a threaded bolt (20) and has a first deformation portion (5) between the internal thread (4) or the connecting portion (27) for the threaded bolt (20) and the head portion (2), wherein the head portion (2) has a larger outside diameter (D1) than the shank (3), wherein a wall (6) of the shank (3) has a weakening in the region of the first deformation portion (5), for forming a first closing head (8) on a side of the one portion (14) of the two portions (14, 15) that faces away from the head portion (2) after a deformation of the first deformation portion (5), wherein the shank (3) has a second deformation portion (9), wherein the wall (6) of the shank (3) has a weakening in the region of the second deformation portion (9), for forming a set head (10) on a side of the other portion (15) of the two portions (14, 15) that faces away from the head portion (2) after a deformation of the second deformation portion (9), wherein the internal thread (4) or the connecting portion (27) for the threaded bolt (20) is formed between the first deformation portion (5) and the second deformation portion (9), wherein the shank (3) has a third deformation portion (11) between the internal thread (4) or the connecting portion (27) for the threaded bolt (20) and the second deformation portion (9), wherein the wall (6) of the shank (3) has a weakening in the region of the third deformation portion (11), for forming a second closing head (12) on a side of the other portion (15) of the two portions (14, 15) that faces the head portion (2) after a deformation of the third deformation portion (11),
b) Incorporating a respective setting hole (26) in the portions (14, 15),
c) Introducing the shank (3) of the blind rivet element (1) into the two portions (14, 15) in such a way that the shank (3) traverses the two setting holes (26), wherein the head portion (2) is arranged spaced apart from the one portion (14) in the axial direction (Z) on a side of the one portion (14) that faces away from the other portion (15), and the second deformation portion (9) is arranged on a side of the other portion (15) that faces away from the one portion (14),
d) Deforming the second deformation portion (9) in such a way that it forms the set head (10) on the side of the other portion (15) that faces away from the head portion (2),
e) Deforming the third deformation portion (11) in such a way that it forms the second closing head (12) on the side of the other portion (15) facing away from the head portion (2),
f) Deforming the first deformation portion (5) in such a way that it forms the first closing head (8) on the side of the one portion (14) that faces away from the head portion (2),
wherein the method steps d), e) and f) occur in the specified order.

2. Method according to Claim 1, wherein the deformation of the second deformation portion (9) and/or of the third deformation portion (11) occurs from the side of the blind rivet element (1) that faces away from the head portion (2).

3. Method according to Claim 1 or 2, wherein the deformation of the first deformation portion (5) occurs from the side of the blind rivet element (1) that has the head portion (2).

4. Method according to one of Claims 1 to 3, wherein, after the deformation of the third deformation portion (11) and/or of the second deformation portion (9), the head portion (2) is arranged spaced apart from the one portion (14) in the axial direction (Z).

5. Method according to one of Claims 1 to 4, wherein, after the deformation of the second deformation portion (9) and of the third deformation portion (11), the other portion (15) is held clamped between the set head (10) and the second closing head (12).

6. Method according to one of Claims 1 to 5, wherein, before the deformation of the third deformation portion (11), a region of the first deformation portion (5) that has the weakening of the wall (6), in particular the first deformation portion (5), is arranged outside an intermediate region (23) formed between the two portions (14, 15), and, after the deformation of the third deformation portion (11), the region of the first deformation portion (5) that has the weakening of the wall (6), in particular the first deformation portion (5), is arranged in the intermediate region (23).

7. Method according to one of Claims 1 to 6, wherein, after the deformation of the third deformation portion (11), an axial dimension of the region of the first deformation portion (5) that is arranged in the intermediate region (23) is smaller than an axial dimension of the region of the first deformation portion (5) that is arranged outside the intermediate region (23).

8. Method according to one of Claims 2 to 7, wherein the deformation of the first deformation portion (5) occurs without or substantially without an axial change in length of the region of the shank (3) that is arranged in the intermediate region (23).

9. Method according to one of Claims 1 to 8, wherein the axial distance between the head portion (2) and the one portion (14) is reduced during deformation of the first deformation portion (5) and/or of the second deformation portion (9) and/or of the third deformation portion (11), with in particular the head portion (2) contacting the one portion (14) after the deformation of the first deformation portion (5).

10. Method according to one of Claims 1 to 9, wherein a force to be applied to form the set head (10) is less than a force to be applied to form the second closing head (12).

11. Method according to one of Claims 1 to 10, wherein the shank (3) has a weakening of the wall (6) by means of a plurality of holes (7) in the shank (3) in a central circumference region of the first deformation portion (5) and/or of the second deformation portion (9) and/or of the third deformation portion (11), to form the first closing head (8) or the set head (10) or the second closing head (12) in the form of a peripheral bead after the deformation of the respective deformation portion (5, 9, 11).

12. Method according to one of Claims 1 to 11, wherein the outside diameter of the shank (3) of the blind rivet element (1) is constant.

13. Method according to one of Claims 1 to 12, wherein the wall (6) has a smaller wall thickness in the region of the second deformation portion (9) than in a region (24) of the shank (3) which adjoins the second deformation portion (9) in the direction of the head portion (2).

14. Method according to one of Claims 1 to 13, wherein the blind rivet element (1) has a through-opening (25) which traverses the blind rivet element (1) in the axial direction (Z).

## Revendications

1. Procédé pour enfoncer un élément de rivet aveugle (1) dans deux portions espacées (14, 15) de deux composants ou d'un composant pour rigidifier les deux portions espacées (14, 15) des deux composants ou du composant, en particulier pour rigidifier deux parois opposées d'un corps creux (13) formant les portions (14, 15), le procédé présentant les étapes de procédé suivantes :
a) fourniture de l'élément de rivet aveugle (1), de l'une des portions (14) et de l'autre portion (15) des deux portions espacées (14, 15), l'élément de rivet aveugle (1) présentant une portion de tête (2) et une tige (3) adjacente à la portion de tête (2) dans une direction axiale (Z) de l'élément de rivet aveugle (1), la tige (3) présentant un filetage intérieur (4) ou une portion de connexion (27) pour un boulon fileté (20) et, entre le filetage intérieur (4) ou la portion de connexion (27) pour le boulon fileté (20) et la portion de tête (2), une première portion de déformation (5), la portion de tête (2) présentant un plus grand diamètre extérieur (D1) que la tige (3), une paroi (6) de la tige (3) présentant, dans la région de la première portion de déformation (5), un affaiblissement pour réaliser une première tête de fermeture (8) sur un côté de l'une des portions (14) des deux portions (14, 15) opposé à la portion de tête (2), après une déformation de la première portion de déformation (5), la tige (3) présentant une deuxième portion de déformation (9), la paroi (6) de la tige (3) présentant, dans la région de la deuxième portion de déformation (9), un affaiblissement pour réaliser une tête d'enfoncement (10) sur un côté de l'autre portion (15) des deux portions (14, 15) opposé à la portion de tête (2), après une déformation de la deuxième portion de déformation (9), le filetage intérieur (4) ou la portion de connexion (27) pour le boulon fileté (20) étant réalisé(e) entre la première portion de déformation (5) et la deuxième portion de déformation (9), la tige (3) présentant, entre le filetage intérieur (4) ou la portion de connexion (27) pour le boulon fileté (20) et la deuxième portion de déformation (9), une troisième portion de déformation (11), la paroi (6) de la tige (3) présentant, dans la région de la troisième portion de déformation (11), un affaiblissement pour réaliser une deuxième tête de fermeture (12) sur un côté de l'autre portion (15) des deux portions (14, 15) tourné vers la portion de tête (2), après une déformation de la troisième portion de déformation (11),
b) réalisation à chaque fois d'un trou d'enfoncement (26) dans les portions (14, 15),
c) introduction de la tige (3) de l'élément de rivet aveugle (1) dans les deux portions (14, 15) de telle sorte que la tige (3) traverse les deux trous d'enfoncement (26), la portion de tête (2) étant disposée sur un côté de l'une des portions (14) opposé à l'autre portion (15) dans la direction axiale (Z) à distance de l'une des portions (14) et la deuxième portion de déformation (9) étant disposée sur un côté de l'autre portion (15) opposé à l'une des portions (14),
d) déformation de la deuxième portion de déformation (9) de telle sorte que celle-ci constitue la tête d'enfoncement (10) sur le côté de l'autre portion (15) opposé à la portion de tête (2),
e) déformation de la troisième portion de déformation (11) de telle sorte que celle-ci constitue la deuxième tête de fermeture (12) sur le côté de l'autre portion (15) tourné vers la portion de tête (2),
f) déformation de la première portion de déformation (5) de telle sorte que celle-ci constitue la première tête de fermeture (8) sur le côté de l'une des portions (14) opposé à la portion de tête (2),
les étapes de procédé d), e) et f) s'effectuant dans la séquence indiquée.

2. Procédé selon la revendication 1, dans lequel la déformation de la deuxième portion de déformation (9) et/ou de la troisième portion de déformation (11) s'effectue à partir du côté de l'élément de rivet aveugle (1) opposé à la portion de tête (2).

3. Procédé selon la revendication 1 ou 2, dans lequel la déformation de la première portion de déformation (5) s'effectue à partir du côté de l'élément de rivet aveugle (1) présentant la portion de tête (2).

4. Procédé selon l'une quelconque des revendications 1 à 3, dans lequel, après la déformation de la troisième portion de déformation (11) et/ou de la deuxième portion de déformation (9), la portion de tête (2) est disposée dans la direction axiale (Z) à distance de l'une des portions (14).

5. Procédé selon l'une quelconque des revendications 1 à 4, dans lequel, après la déformation de la deuxième portion de déformation (9) et de la troisième portion de déformation (11), l'autre portion (15) est retenue par serrage entre la tête d'enfoncement (10) et la deuxième tête de fermeture (12) .

6. Procédé selon l'une quelconque des revendications 1 à 5, dans lequel, avant la déformation de la troisième portion de déformation (11), une région de la première portion de déformation (5) présentant l'affaiblissement de la paroi (6), en particulier la première portion de déformation (5), est disposée à l'extérieur d'une région intermédiaire (23) réalisée entre les deux portions (14, 15) et après la déformation de la troisième portion de déformation (11), la région de la première portion de déformation (5) présentant l'affaiblissement de la paroi (6), en particulier la première portion de déformation (5), est disposée dans la région intermédiaire (23).

7. Procédé selon l'une quelconque des revendications 1 à 6, dans lequel, après la déformation de la troisième portion de déformation (11), une dimension axiale de la région de la première portion de déformation (5) qui est disposée dans la région intermédiaire (23) est inférieure à une dimension axiale de la région de la première portion de déformation (5) qui est disposée à l'extérieur de la région intermédiaire (23).

8. Procédé selon l'une quelconque des revendications 2 à 7, dans lequel la déformation de la première portion de déformation (5) s'effectue sans ou quasiment sans variation de longueur axiale de la région de la tige (3) qui est disposée dans la région intermédiaire (23).

9. Procédé selon l'une quelconque des revendications 1 à 8, dans lequel la distance axiale entre la portion de tête (2) et l'une des portions (14) lors de la déformation de la première portion de déformation (5) et/ou de la deuxième portion de déformation (9) et/ou de la troisième portion de déformation (11) diminue, en particulier la portion de tête (2) vient en contact avec l'une des portions (14) après la déformation de la première portion de déformation (5) .

10. Procédé selon l'une quelconque des revendications 1 à 9, dans lequel une force devant être appliquée pour former la tête d'enfoncement (10) est plus faible qu'une force devant être appliquée pour former la deuxième tête de fermeture (12).

11. Procédé selon l'une quelconque des revendications 1 à 10, dans lequel la tige (3) présente dans une région périphérique centrale de la première portion de déformation (5) et/ou de la deuxième portion de déformation (9) et/ou de la troisième portion de déformation (11) un affaiblissement de la paroi (6) au moyen de plusieurs trous (7) dans la tige (3), pour réaliser la première tête de fermeture (8) ou la tête d'enfoncement (10) ou la deuxième tête de fermeture (12) en forme de bourrelet périphérique après la déformation de la portion de déformation respective (5, 9, 11).

12. Procédé selon l'une quelconque des revendications 1 à 11, dans lequel le diamètre extérieur de la tige (3) de l'élément de rivet aveugle (1) est constant.

13. Procédé selon l'une quelconque des revendications 1 à 12, dans lequel la paroi (6) dans la région de la deuxième portion de déformation (9) présente une plus faible épaisseur de paroi que dans une région (24) de la tige (3) adjacente à la deuxième portion de déformation (9) dans la direction de la portion de tête (2).

14. Procédé selon l'une quelconque des revendications 1 à 13, dans lequel l'élément de rivet aveugle (1) présente une ouverture de passage (25) traversant l'élément de rivet aveugle (1) dans la direction axiale (Z).
